# EUROPEAN PATENT APPLICATION

(11) **EP 3 290 727 A1**
(43) Date of publication of application: **07.03.2018**
(21) Application number: 16786318.2
(22) Date of filing: 14.04.2016
(51) Int. Cl.: F16C 33/08, B60G 15/06, F16C 17/04, F16C 33/74

(54) **THRUST BEARING FOR VEHICLE**

(30) Priority: 28.04.2015 JP 2015091814
(71) Applicant: Oiles Corporation, Tokyo 108-0075 (JP)
(72) Inventor: NISHIOKA, Ayumu, Fujisawa-shi Kanagawa 252-0811 (JP); SAKAIRI, Yoshikazu, Fujisawa-shi Kanagawa 252-0811 (JP)
(74) Representative: Schlief, Thomas P.
(86) International application number: PCT/JP2016/062044
(87) International publication number: WO 2016/175041

(57) **Abstract**

Provided is a thrust bearing for vehicles, which is configured so as to prevent muddy water, etc. from flowing from the case outer peripheral side, through between a vehicle body-side mounting section and an upper-case upper surface, to the case inner peripheral side, and into a case inside from the case inner peripheral side. A thrust bearing (100) for vehicles is provided with an annular upper case (110) and an annular lower case (120) which overlaps the upper case (110) so as to be capable of pivoting relative thereto. An annular seal ridge (111aa) is formed on the upper-case upper surface (111a) of the upper case (110).

## Description

### TECHNICAL FIELD

The present invention relates to a vehicle thrust bearing including an upper case and a lower case that are rotatable with respect to each other and more specifically, to a vehicle thrust bearing that is incorporated into a four-wheeled vehicle as a thrust bearing of a Strut type (MacPherson type) suspension or an air suspension of the vehicle.

### BACKGROUND ART

Hitherto, as a vehicle thrust bearing, there is known a slide bearing including an upper case made of synthetic resin and forming a ringed bottom surface in an axial direction of a piston rod used in a Strut-type suspension in a front wheel of a four-wheeled vehicle, a lower case made of synthetic resin overlapped rotatably with the upper case around the axial center, and a sliding bearing piece made of synthetic resin, disposed between the ringed bottom surface of the upper case and a ringed top surface of the lower case, and coming into contact with the ringed bottom surface of the upper case by a ringed top surface thereof and into with the ringed top surface of the lower case by a ringed bottom surface thereof (see Patent Literature 1, for example).

### CITATION LIST

### Patent Literature

[Patent Literature 1] Japanese Patent Laid-Open No. 2012-097904 (see particularly FIGs. 2 and 5)

### SUMMARY OF INVENTION

### Technical Problem

However, the conventional sliding bearing described above has a problem that because an top surface of an upper ringed plate portion of the upper case in contact with a vehicle body-side mount portion is configured to be simply flat, there is a case when the upper case slightly deflects by an unbalanced load in the circumferential direction when a thrust load acts after when the sliding bearing is incorporated into the vehicle body-side mount portion. Then, a slight gap may be generated between the vehicle body-side mount portion and the top surface of the upper case, possibly allowing muddy water or the like to infiltrate into the case from a case inner circumferential side by turning around the case inner circumferential side from a case outer circumferential side by passing through the gap between the vehicle body-side mount portion and the upper case top surface.

It is thus an object of the present invention to solve the above-described problem of the conventional art. The present invention provides a vehicle thrust bearing configured to avoid the muddy water or the like to infiltrate into the case from the case inner circumferential side by turning around the case inner circumferential side from the case outer circumferential side by passing through the gap between the vehicle body-side mount portion and the upper case top surface.

### Solution to Problem

In order to solve the abovementioned problem, according to a first aspect of the present invention, a vehicle thrust bearing including an annular upper case and an annular lower case overlapping with the upper case rotatably with respect to each other includes an annular seal projection thread formed on a top surface of the upper case upper case.

In order to also solve the abovementioned problem, according to a second aspect of the present invention, in addition to the configuration of the vehicle thrust bearing as set forth in the first aspect, an annular sliding bearing piece made of synthetic resin and configured to bear a thrust load by being in contact with the upper case and the lower case is provided in an annular space created between the upper case and the lower case.

In order to also solve the abovementioned problem, according to a third aspect of the present invention, in addition to the configuration of the vehicle thrust bearing as set forth in the second aspect, the annular sealing projection thread portion is provided within a projection range of the annular sliding bearing piece viewed from a thrust direction on the upper case top surface.

In order to also solve the abovementioned problem, according to a fourth aspect of the present invention, in addition to the configuration of the vehicle thrust bearing as set forth in the third aspect, the annular sealing projection thread portion is provided at an inner circumferential end of the projection range of the annular sliding bearing piece viewed from the thrust direction on the upper case top surface.

In order to also solve the abovementioned problem, according to a fifth aspect of the present invention, in addition to the configuration of the vehicle thrust bearing as set forth in any one of the first to fourth aspects, an outer circumferential projection thread surface of the annular sealing projection thread portion is provided vertically with respect to the upper case top surface.

In order to also solve the abovementioned problem, according to a sixth aspect of the present invention, in addition to the configuration of the vehicle thrust bearing as set forth in any one of the first to fifth aspects, the upper case is disposed under a vehicle body-side mount portion and the annular sealing projection thread portion abuts on the vehicle body-side mount portion.

In order to also solve the abovementioned problem, according to a seventh aspect of the present invention, in addition to the configuration of the vehicle thrust bearing as set forth in any one of the first to sixth aspects, the lower case overlaps with the upper case rotatably with respect to each other around an axial center of a piston rod used in a shock absorber of a vehicular suspension and bears a load from a damper coil spring of the suspension.

### Advantageous Effects of Invention

Because the vehicle thrust bearing of the present invention includes the upper case and the lower case that overlaps with the upper case so as to be rotatable with respect to the upper case, the upper case and the lower case can rotate smoothly with respect to each other. In addition, the vehicle thrust bearing of the present invention can achieve the following unique effects.

According to the vehicle thrust bearing of the invention of the first aspect, because the annular sealing projection thread is formed on the upper case top surface of the upper case, the annular sealing projection thread portion is squashed corresponding to a distribution of a thrust load in a circumferential direction when the vehicle thrust bearing is incorporated into the vehicle body-side mount portion and the thrust load acts. Then, the gap between the vehicle body-side mount portion and the upper case top surface is sealed across a whole circumferential range. Accordingly, it is possible to avoid muddy water or the like from infiltrating into the case from the case inner circumferential side by turning around the case inner circumferential side from the case outer circumferential side by passing through the gap between the vehicle-side mount member and the upper case top surface even if the muddy water or the like try to enter from the gap between the vehicle-side mount member and the upper case top surface from the case outer circumferential side.

According to the vehicle thrust bearing of the invention of the second aspect in addition to the effect brought about by the invention of the first aspect, because the annular sliding bearing piece made of synthetic resin and configured to bear a thrust load by being in contact with the upper case and the lower case is provided in the annular space created between the upper case and the lower case, a friction resistance between the upper case and the lower case becomes small. Accordingly, the relative rotation of the upper case and the lower case can be smoothed more.

According to the vehicle thrust bearing of the invention of the third aspect, in addition to the effect brought about by the invention of the second aspect, because the annular sealing projection thread portion is provided within a projection range of the annular sliding bearing piece viewed from a thrust direction on the upper case top surface, the thrust load acting on the annular sliding bearing piece also acts rigidly on the annular sealing projection thread portion. Accordingly, the annular sealing projection thread portion is squashed more reliably, and the gap between the vehicle body-side mount portion and the upper case top surface can be sealed across the whole circumferential range.

According to the vehicle thrust bearing of the invention of the fourth aspect, in addition to the effect brought about by the invention of the third aspect, because the annular sealing projection thread portion is provided at an inner circumferential end of the projection range of the annular sliding bearing piece viewed from the thrust direction on the upper case top surface, the torque becomes small as compared to a case where the annular sealing projection thread portion is provided at an outer circumferential side. Thus, it is possible to reduce a burden of a vehicle body.

According to the vehicle thrust bearing of the invention of the fifth aspect, in addition to the effect brought about by the invention of any one of the first to fourth aspects, because an outer circumferential projection thread surface of the annular sealing projection thread portion is provided vertically with respect to the upper case top surface, surface tension hardly acts on the muddy water or the like that try to infiltrate into the case as compared to a case where the outer circumferential projection thread surface is inclined with respect to the upper case top surface, and a capillary phenomenon hardly occurs. Accordingly, it is possible to enhance the sealing more.

According to the vehicle thrust bearing of the invention of the sixth aspect, in addition to the effect brought about by the invention of any one of the first to fifth aspects, because the upper case is disposed under the vehicle body-side mount portion and the annular sealing projection thread portion abuts on the vehicle body-side mount portion, the annular sealing projection thread portion is positioned to be soft with respect to the vehicle body-side mount portion. Accordingly, the annular sealing projection thread portion is squashed more reliably, and the gap between the vehicle body-side mount portion and the upper case top surface can be sealed across the whole circumferential range.

According to the vehicle thrust bearing of the invention of the seventh aspect, in addition to the effect brought about by the invention of any one of the first to sixth aspects, the lower case overlaps with the upper case rotatably with respect to each other around the axial center of the piston rod used in the shock absorber of the vehicular suspension and bears the load from the damper coil spring of the suspension. Accordingly, because the annular sealing projection thread portion is squashed corresponding to an unbalanced distribution of the thrust load, the gap between the vehicle body-side mount portion and the upper case top surface can be sealed across the whole circumferential range even in a case where the unbalanced load acts.

### BRIEF DESCRIPTION OF DRAWINGS

- **FIG. 1**: is a partially sectional perspective view of a vehicle thrust sliding bearing of a first embodiment of the present invention.
- **FIG. 2**: is a plan view seen from a reference numeral 2 in FIG. 1.
- **FIG. 3**: is a section view taken along a reference numeral 3-3 indicated in FIG. 2.
- **FIG. 4**: is an enlarged section view of a spot indicated by a reference numeral 4 in FIG. 3.
- **FIG. 5A**: is a section view of the vehicle thrust sliding bearing in a condition in which a load is unbalanced.
- **FIG. 5B**: is a section view of the vehicle thrust sliding bearing in the condition in which the load is unbalanced.
- **FIG. 6A**: is an enlarged section view of a main part of the vehicle thrust sliding bearing of a second embodiment of the present invention.
- **FIG. 6B**: is an enlarged section view of the main part of the vehicle thrust sliding bearing of the second embodiment of the present invention.
- **FIG. 7**: is a plan view of the vehicle thrust sliding bearing of a third embodiment of the present invention.
- **FIG. 8**: is a plan view of the vehicle thrust sliding bearing of a fourth embodiment of the present invention.

### MODE FOR CARRYING OUT THE INVENTION

Specific embodiments of the present invention may take any configuration as long as a vehicle thrust bearing including an annular upper case and an annular lower case overlapping with the upper case rotatably with respect to each other further includes an annular sealing projection thread portion formed on an upper case top surface of the upper case and avoids muddy water or the like from infiltrating into the case from a case inner circumferential side by turning around the case inner circumferential side from a case outer circumferential side by passing through a gap between a vehicle-side mount portion and the upper case top surface even if the muddy water or the like try to enter from the gap between the vehicle-side mount portion and the upper case top surface from the case outer circumferential side.

For example, the vehicle thrust bearing may include a bearing piece interposed in an annular space created between the upper case and the lower case and configured to bear a thrust load applied from a tire side, or may be configured such that the upper case slides directly with the lower case without including the bearing piece.

In a case where the vehicle thrust bearing includes the bearing piece, the bearing piece may be a sliding bearing piece that slides with the upper case or the lower case or may be a rolling bearing piece that rollably keeps a rolling member such as a ball.

A suspension of a vehicle may have any configuration as long as it has a configuration to which a thrust load is applied.

The upper case may have any configuration as long as it abuts on the vehicle body-side mount portion. A strut type suspension, i.e., an exemplary suspension, may be either a type in which an upper end portion of a piston rod of a shock absorber is fitted into the vehicle body-side mount portion or a type in which it is fitted into the upper case.

Still further, the shape of the annular sealing projection thread portion may be any shape such as a perfect circle, elliptical or polygonal, or may be doubled or tripled as long as the projection threads are linked in a shape of loop.

A material forming the upper case may be thermoplastic synthetic resin such as polyacetal resin, polyamide resin, and polybutylene terephthalate resin.

A material forming the lower case may be reinforced thermoplastic synthetic resin such as polyacetal resin, polyamide resin, and polybutylene terephthalate resin containing a reinforcing filler such as glass fiber, glass powder, carbon fiber by 0 to 50 mass %.

A preferable exemplary material forming the sliding bearing piece is thermoplastic synthetic resin such as polyolefin resin containing polyacetal resin, polyamide resin, polybutylene terephthalate resin and polyethylene resin.

### First Embodiment

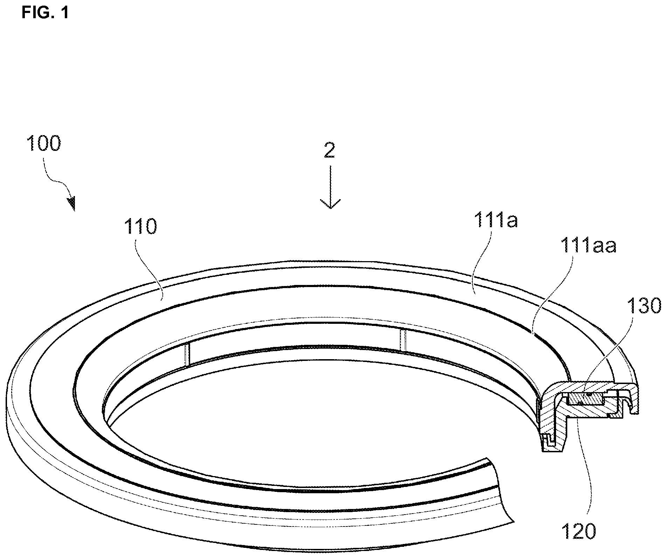

A vehicle thrust sliding bearing 100 of a first embodiment of the present invention will be described below with reference to FIGs. 1 through 5B.

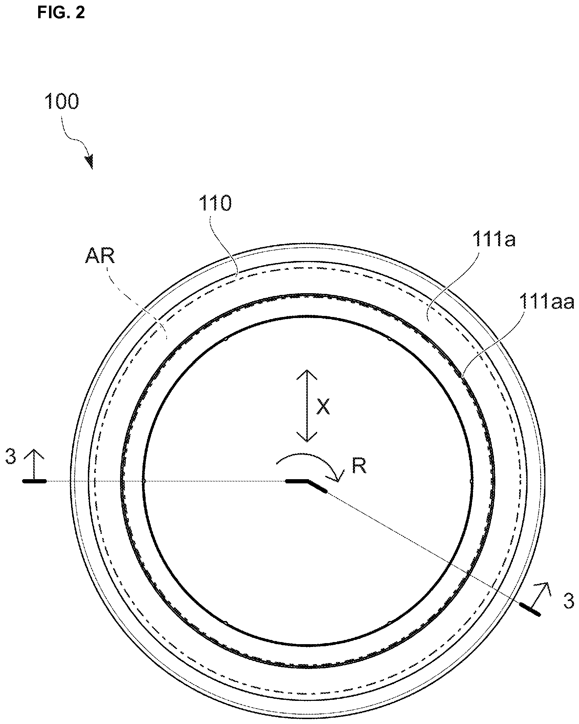

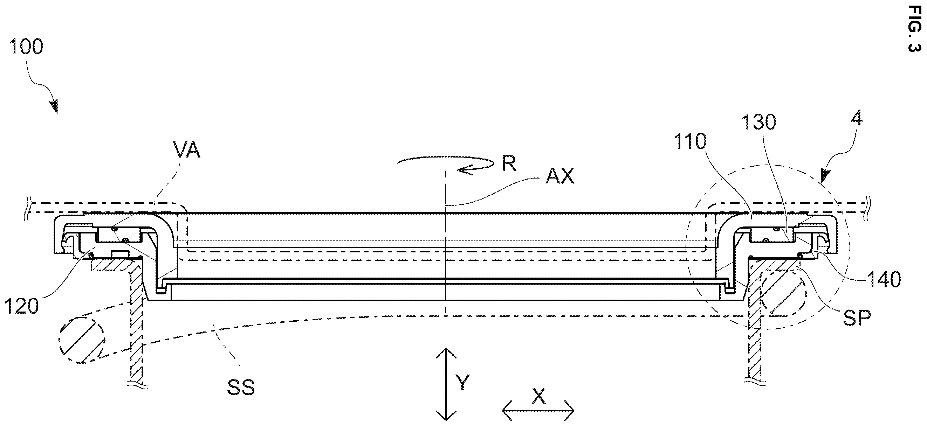

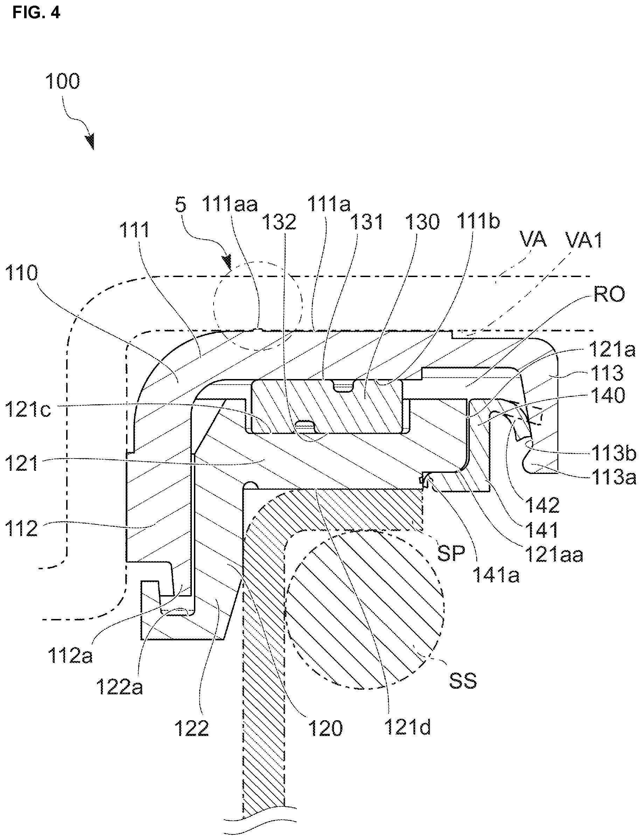

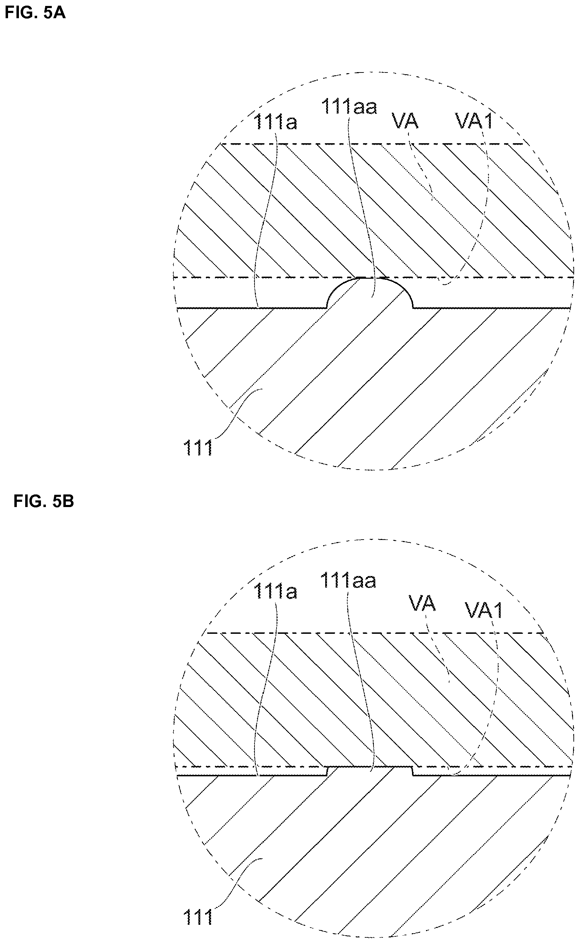

Here, FIG. 1 is a partially sectional perspective view of the vehicle thrust sliding bearing 100 of the first embodiment of the present invention, FIG. 2 is a plan view seen from a reference numeral 2 in FIG. 1, FIG. 3 is a section view taken along a reference numeral 3-3 indicated in FIG. 2, FIG. 4 is an enlarged section view of a spot indicated by a reference numeral 4 in FIG. 3,and FIGs. 5A and 5B are section views of the vehicle thrust sliding bearing in a condition in which a load is unbalanced, wherein FIG. 5A is a section view of a side thereof on which the load acts largely more than that of FIG. 5B.

As illustrated in FIGs. 1 through 5B, the vehicle thrust sliding bearing 100 serving as a vehicle thrust bearing of the first embodiment of the invention includes an annular upper case 110 made of synthetic resin, an annular lower case 120 made of synthetic resin, and an annular sliding bearing piece 130 made of synthetic resin and serving as a bearing piece.

Among them, the upper case 110 is configured to abut on a vehicle-side mount member VA serving as a vehicle body-side mount portion.

According to the present embodiment, the upper case 110 integrally includes an annular upper case base 111 forming an annular upper case top surface 111a and an annular upper case bottom surface 111b in an axial direction Y of a piston rod and mounted to a vehicle-side, an inner circumferential cylindrical portion 112 suspended from an inner circumferential end in a radial direction X of the upper case base 111, and an outer circumferential cylindrical portion 113 suspending from an outer circumferential end in the radial direction X of the upper case base 111.

The lower case 120 is configured to overlap rotatably with respect to the upper case 110 around an axial center AX of the piston rod.

According to the present embodiment, the lower case 120 integrally includes an annular lower case base 121 rotatably overlapped with the upper case 110 around the axial center AX and an inner circumferential cylindrical portion 122 suspended from an inner radial direction of the lower case base 121.

A base outer circumferential surface 121a is formed on a radial outer side of the lower case base 121. The base outer circumferential surface 121a and an outer annular step 121aa formed on the base outer circumferential surface 121a are provided with a ringed seal member 140 formed of synthetic rubber which is one example of an elastic material described later.

It is noted that an outer annular hook 113a is formed on the outer circumferential cylindrical portion 113 of the upper case 110.

Then, the relative move of the upper case 110 and the lower case 120 in the axial direction Y is restricted by the outer annular hook 113a abutting on the ringed seal member 140.

That is, the outer annular hook 113a prevents the upper case 110 from disassembled from the lower case 120.

Still further, an inner annular groove 122a is formed inside of the inner circumferential cylindrical portion 122 of the lower case 120. The inner annular groove 122a is provided such that it engages with an inner annular projection thread 112a formed at a lower end of the inner circumferential cylindrical portion 112 of the upper case 110 with a slight gap between them.

The annular sliding bearing piece 130 is interposed within an annular space created between the upper case 110 and the lower case 120 and is configured to bear a thrust load applied.

According to the present embodiment, the annular sliding bearing piece 130 is provided in the annular space between the upper case bottom surface 111b of the upper case base 111 and a lower case top surface 121c of the lower case base 121.

The annular sliding bearing piece 130 includes a bearing top surface 131 that comes into slidable contact with the upper case bottom surface 111b of the upper case base 111, and a bearing bottom surface 132 that comes into contact with the lower case top surface 121c of the lower case base 121 of the lower case 120.

Note that it is needless to say that a sectional profile of the annular sliding bearing piece 130 viewed from a circumferential direction R can be formed into a shape of L for example so as to come into contact with both an outer circumferential surface of the inner circumferential cylindrical portion 112 of the upper case 110 and an inner circumferential surface of the inner circumferential cylindrical portion 122 of the lower case 120 to bear a radial load by the annular sliding bearing piece 130.

Still further, a convex portion can be formed on one of the annular sliding bearing piece 130 and the lower case 120 and a concave portion engaging with the convex portion can be formed on the other one for example such that the annular sliding bearing piece 130 does not rotate with respect to the lower case 120. Or, it is also possible to configure that the annular sliding bearing piece 130 rotates with respect to the lower case 120 without forming the convex and concave portions.

The ringed seal member 140 is formed of an elastic material and is provided between an inner circumferential surface 113b of the outer circumferential cylindrical portion 113 of the upper case 110 and the base outer circumferential surface 121a of the lower case base 121 of the lower case 120.

The ringed seal member 140 includes an inner circumferential base 141 coming into contact with the base outer circumferential surface 121a of the lower case base 121 and an annular outer lip portion 142 extending to a radial outer side from the inner circumferential base 141 and coming into contact with an inner circumferential surface 113b of the outer circumferential cylindrical portion 113 of the upper case 110.

Still further, the inner circumferential base 141 includes an inner micro-lip 141a coming into contact with an inner circumferential side of the outer annular step 121aa.

Then, the ringed seal member 140 is configured such that a contact part of the annular sliding bearing piece 130 with the upper case 110 and a contact part of the annular sliding bearing piece 130 with the lower case 120 are sealed at the case outer side to prevent muddy water or the like from infiltrating into a gap path RO between the upper case 110 and the lower case 120.

As illustrated in FIGs. 3 and 4, a spring pad SP formed annularly of rubber is provided at a lower case bottom surface 121d of the lower case base 121.

The vehicle thrust sliding bearing 100 is incorporated into a Strut type (MacPherson type) suspension by installing the vehicle thrust sliding bearing 100 between a vehicle-side seat surface VA1 of a vehicle-side mount member VA and a damper coil spring SS such that the upper case top surface 111a of the upper case 110 abuts on the vehicle-side seat surface VA1 of the vehicle-side mount member VA and the spring pad SP abuts on an upper end of the damper coil spring SS.

It is noted that the spring pad SP may be formed integrally with the lower case 120.

According to the present embodiment, as illustrated in FIGs. 1 through 5B, an annular sealing projection thread 111aa serving as an annular sealing projection thread portion configured abut on the vehicle-side mount member VA to seal a gap between the vehicle-side mount member VA and the upper case 110 is formed with dimensions of around 0.1 to 0.2 mm in height and 0.4 to 0.6 mm in width for example on the upper case top surface 111a of the upper case 110.

Thereby, when the vehicle thrust sliding bearing 100 is incorporated into the vehicle-side mount member VA and a thrust load acts, the annular sealing projection thread 111aa is squashed corresponding to distribution of the thrust load in the circumferential direction R as illustrated in FIGs. 5A and 5B and seals the gap between the vehicle-side mount member VA and the upper case top surface 111a across a whole circumferential range.

Still further, according to the present embodiment, the annular sealing projection thread 111aa is provided within a projection range AR of the annular sliding bearing piece 130 in a view from the axial direction Y which is a thrust direction on the upper case top surface 111a.

Thereby, the thrust load acting on the annular sliding bearing piece 130 acts rigidly also on the annular sealing projection thread 111aa.

That is, the annular sealing projection thread 111aa is squashed more reliably and seals the gap between the vehicle-side mount member VA and the upper case top surface 111a across the whole circumferential range.

Still further, according to the present embodiment, the annular sealing projection thread 111aa is provided at the inner circumferential end within the projection range AR of the annular sliding bearing piece 130 in a view from the axial direction Y on the upper case top surface 111a.

Thereby, the thrust load received by the annular sliding bearing piece 130 becomes largest at the inner circumferential end of the annular sliding bearing piece 130, a torque radius becomes small and a rotation torque of the vehicle thrust sliding bearing 100 becomes small as compared to a case where the annular sealing projection thread 111aa is provided at an outer circumferential side.

The vehicle thrust sliding bearing 100 serving as the vehicle thrust bearing of the first embodiment of the invention thus obtained is configured such that the annular sealing projection thread 111aa serving as the annular sealing projection thread portion is formed on the upper case top surface 111a of the upper case 110, so that it is possible to avoid the muddy water or the like from infiltrating into the case from the case inner circumferential side by turning around the case inner circumferential side from the case outer circumferential side by passing through the gap between the vehicle-side mount member VA and the upper case top surface 111a even if the muddy water or the like try to enter from the gap between the vehicle-side mount member VA and the upper case top surface 111a from the case outer circumferential side.

Still further, because the annular sliding bearing piece 130 serving as the sliding bearing piece made of synthetic resin and coming into contact with the upper case 110 and the lower case 120 to bear the thrust load is provided within the annular space created between the upper case 110 and the lower case 120 and the annular sealing projection thread 111aa is provided within the projection range AR of the annular sliding bearing piece 130 in a view from the axial direction Y which is the thrust direction on the upper case top surface 111a, the annular sealing projection thread 111aa is squashed more reliably and seals the gap between the vehicle-side mount member VA and the upper case top surface 111a around the whole circumferential range.

Still further, because the annular sealing projection thread 111aa is provided at the inner circumferential end of the projection range AR of the annular sliding bearing piece 130 in the view from the axial direction Y on the upper case top surface 111a, a smooth steering operation can be assured. Thus, advantageous effects of the present embodiment are remarkable.

### Second Embodiment

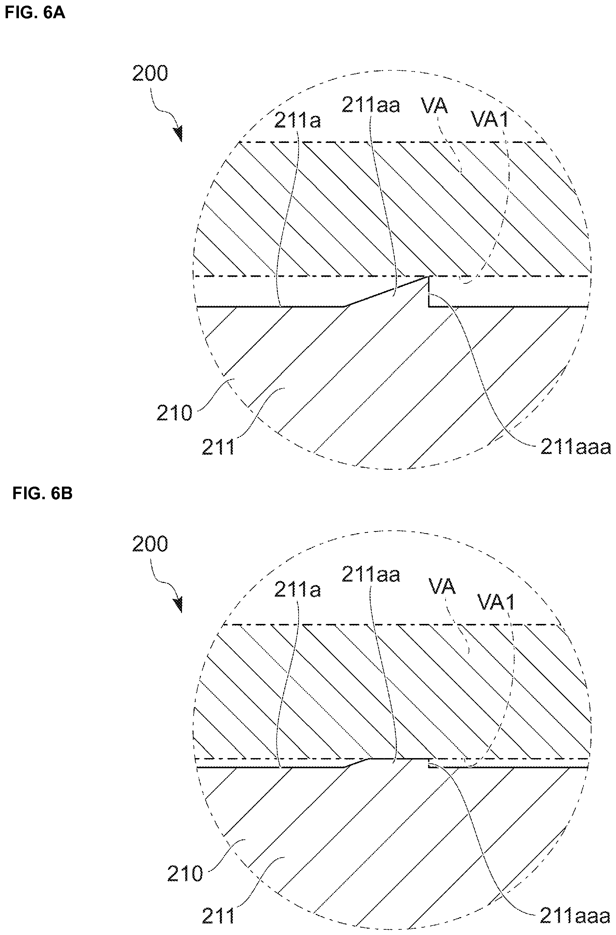

Next, a vehicle thrust sliding bearing 200 of a second embodiment of the present invention will be described with reference FIGs. 6A and 6B.

Here, FIG. 6A is an enlarged section view of a main part of the vehicle thrust sliding bearing 200 of a second embodiment of the present invention illustrating a condition in which a annular sealing projection thread 211aa is not yet squashed, and FIG. 6B is an enlarged section view of the main part illustrating a condition in which the annular sealing projection thread 211aa is squashed.

The vehicle thrust sliding bearing 200 of the second embodiment is similar to the vehicle thrust sliding bearing 100 of the first embodiment except a sectional profile of the annular sealing projection thread 111aa viewed from the circumferential direction R is changed, and many components are common with those of the vehicle thrust sliding bearing 100 of the first embodiment. Thus, the common components will be simply denoted by reference numerals of 200s with common last two digits and the detailed description thereof will be omitted.

As illustrated in FIG. 6A, the vehicle thrust sliding bearing 200 of the second embodiment of the invention is provided with an outer circumferential projection thread surface 211aaa of an annular sealing projection thread 211aa vertically to an upper case top surface 211a.

Thereby, surface tension hardly acts on the muddy water or the like that try to infiltrate into the case as compared to a case where the outer circumferential projection thread surface 211aaa is inclined with respect to the upper case top surface 211a, and a capillary phenomenon hardly occurs.

That is, almost no tension heading from the case outer circumferential side (right side in FIG. 6A) to the case inner circumferential side (left side in FIG. 6A) acts on the muddy water or the like that try to infiltrate from the case outer circumferential side to the case inner circumferential side.

Still further, as illustrated in FIG. 6B, the same effect is brought about also in a condition in which the annular sealing projection thread 211aa is squashed.

Because the vehicle thrust sliding bearing 200 of the second embodiment of the invention thus obtained is configured such that the outer circumferential projection thread surface 211aaa of the annular sealing projection thread 211aa is provided vertically with respect to the upper case top surface 211a, sealing can be enhanced more. Thus, the advantageous effect of the present embodiment is remarkable.

### Third Embodiment

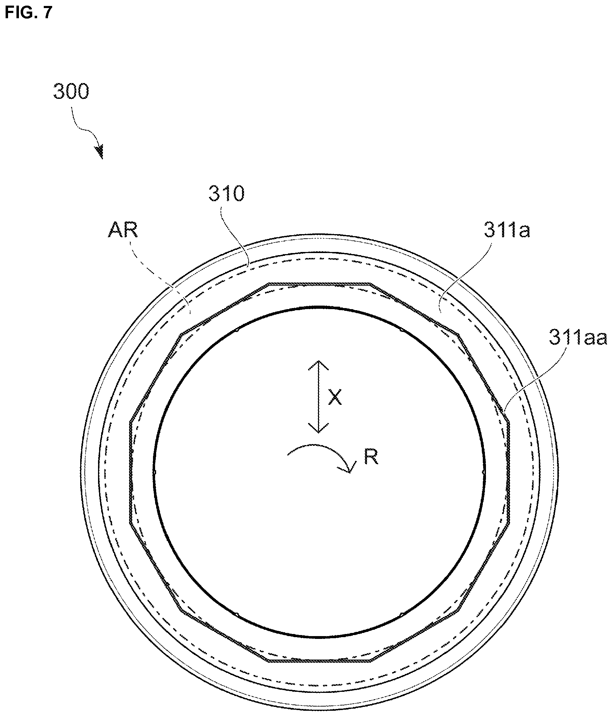

In succession, a vehicle thrust sliding bearing 300 of a third embodiment of the invention will be described with reference to FIG. 7.

Here, FIG. 7 is a plan view of the vehicle thrust sliding bearing 300 of the third embodiment of the invention.

The vehicle thrust sliding bearing 300 of the third embodiment is similar to the vehicle thrust sliding bearing 100 of the first embodiment except a profile of the annular sealing projection thread 111aa viewed from the axial direction Y is changed, and many components are common with those of the vehicle thrust sliding bearing 100 of the first embodiment. Thus, the common components will be denoted by reference numerals of 300s with common last two digits and the detailed description thereof will be omitted.

As illustrated in FIG. 7, an annular sealing projection thread 311aa is formed into dodecagon as one example of the polygon in a view from the axial direction Y in the vehicle thrust sliding bearing 300 of the third embodiment of the invention.

This arrangement makes it possible to obtain the same advantageous effects with the first embodiment described above.

### Fourth Embodiment

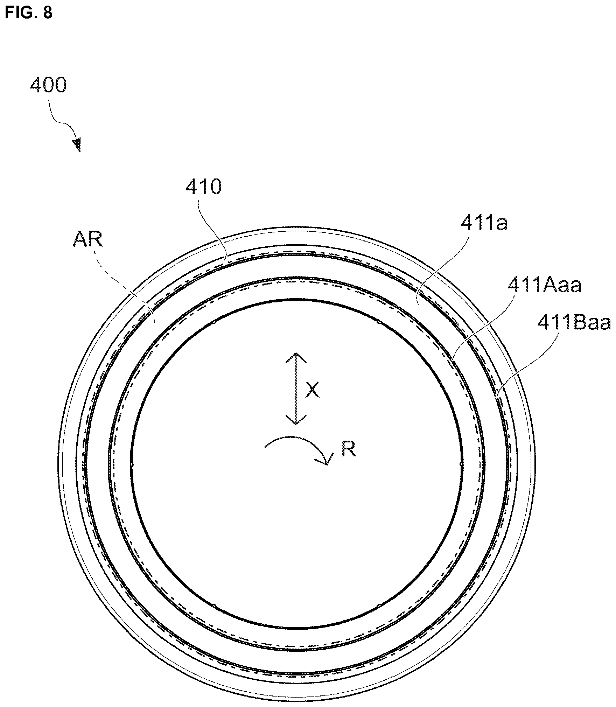

In succession, a vehicle thrust sliding bearing 400 of a fourth embodiment of the invention will be described with reference to FIG. 8.

Here, FIG. 8 is a plan view of the vehicle thrust sliding bearing 400 of the fourth embodiment of the invention.

The vehicle thrust sliding bearing 400 of the fourth embodiment is similar to the vehicle thrust sliding bearing 100 of the first embodiment except a profile of the annular sealing projection thread 111aa viewed from the axial direction Y is changed twofold, and many components are common with those of the vehicle thrust sliding bearing 100 of the first embodiment. Thus, the common components will be denoted by reference numerals of 400s with common last two digits and the detailed description thereof will be omitted.

As illustrated in FIG. 8, in the vehicle thrust sliding bearing 400 of the fourth embodiment of the invention, an inner annular sealing projection thread 411Aaa and an outer annular sealing projection thread 411Baa are disposed so as to be twofold in a view from the axial direction Y.

This arrangement makes it possible to obtain the same advantageous effects with the first embodiment described above.

### DESCRIPTION OF REFERENCE NUMERALS

- 100, 200, 300, 400: vehicle thrust sliding bearing
- 110, 210,310, 410: uppercase
- 111: upper case base
- 111a, 211a, 311a, 411a: upper case top surface
- 111aa 211aa, 311aa: annular seal projection thread
- 411Aaa: inner annular seal projection thread
- 411Baa: outer annular seal projection thread
- 211aaa: outer projection thread surface
- 111b: upper case bottom surface
- 112: inner circumference cylindrical portion
- 112a: inner annular projection thread
- 113: outer circumferential cylindrical portion
- 113a: outer annular hook
- 113b: inner circumferential surface
- 120: lower case
- 121: lower case base
- 121a: base outer circumferential surface
- 121aa: outer annular step
- 121c: lower case top surface
- 121d: lower case bottom surface
- 122: inner circumferential cylindrical portion
- 122a: inner annular groove
- 130: annular sliding bearing piece (bearing piece)
- 131: bearing top surface
- 132: bearing bottom surface
- 140: ringed sealing member
- 141: inner circumferential base
- 141a: inner micro-lip
- 142: annular outer lip portion
- AX: axial center of piston rod
- AR: projection range of annular sliding bearing piece viewed from axial direction
- R: circumferential direction
- RO: gap path
- SS: damper coil spring
- SP: spring pad
- VA: vehicle-side mount member (vehicle body-side mount portion)

- VA1: vehicle-side seat surface
- X: radial direction
- Y: axial direction

## Claims

1. A vehicle thrust bearing, comprising:
an annular upper case that is in contact with
a vehicle body-side mount portion; and
an annular lower case overlapping with the upper case rotatably with respect to each other, the upper case being provided with an annular sealing projection thread portion formed on an upper case top surface of the upper case.

2. The vehicle thrust bearing according to claim 1, wherein an annular sliding bearing piece made of synthetic resin and configured to bear a thrust load by being in contact with the upper case and the lower case is provided in an annular space created between the upper case and the lower case.

3. The vehicle thrust bearing according to claim 2, wherein the annular sealing projection thread portion is provided within a projection range of the annular sliding bearing piece viewed from a thrust direction on the upper case top surface.

4. The vehicle thrust bearing according to claim 3, wherein the annular sealing projection thread portion is provided at an inner circumferential end of the projection range of the annular sliding bearing piece viewed from the thrust direction on the upper case top surface.

5. The vehicle thrust bearing according to any one of claims 1 through 4, wherein an outer circumferential projection thread surface of the annular sealing projection thread portion is provided vertically with respect to the upper case top surface.

6. The vehicle thrust bearing according to any one of claims 1 through 5, wherein the upper case is disposed under a vehicle body-side mount portion and the annular sealing projection thread portion abuts on the vehicle body-side mount portion.

7. The vehicle thrust bearing according to any one of claims 1 through 6, wherein the lower case overlaps with the upper case rotatably with respect to each other around an axial center of a piston rod used in a shock absorber of a vehicular suspension and bears a load from a damper coil spring of the suspension.
